(19) Europäisches Patentamt
European Patent Office
Office européen des brevets

(11) EP 4 810 224 A1

(12) **EUROPEAN PATENT APPLICATION**
published in accordance with Art. 153(4) EPC

(43) Date of publication:
**23.09.2026 Bulletin 2026/39**

(21) Application number: **24875785.8**

(22) Date of filing: **21.10.2024**

(51) International Patent Classification (IPC):
***B29C 45/14*** (2006.01) ***B29C 43/34*** (2006.01)
***B29C 45/27*** (2006.01) ***B29C 70/68*** (2006.01)

(52) Cooperative Patent Classification (CPC):
**B29C 43/34; B29C 45/14; B29C 45/27; B29C 70/68**

(86) International application number:
**PCT/JP2024/037425**

(87) International publication number:
**WO 2025/105123 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.11.2023 JP 2023195207**

(71) Applicant: **Teijin Limited**
**Osaka-shi, Osaka 530-0005 (JP)**

(72) Inventors:
- **KITAGAWA, Masahiro**
**Osaka-shi, Osaka 530-0005 (JP)**
- **YOKOMIZO, Hodaka**
**Osaka-shi, Osaka 530-0005 (JP)**

(74) Representative: **Hoffmann Eitle**
**Patent- und Rechtsanwälte PartmbB**
**Arabellastraße 30**
**81925 München (DE)**

# (54) MANUFACTURING METHOD FOR MOLDED ARTICLE

(57) When a composite material and an injection molding material are integrally molded, the end of the composite material is prevented from being sandwiched by the injection molding material. A method for producing a molded article integrally molded from the composite material including reinforcing fibers dispersed in an in-plane direction and a resin and the injection molding material using a first mold and a second mold includes the following steps 101 to 401: step 101: disposing the composite material in a cavity of the first mold; step 201: moving the second mold toward the disposed composite material; step 301: injecting the injection molding material into a mold from a first gate and a second gate provided in the first mold; and step 401: pressing the composite material and the injection molding material in the mold to integrally mold the molded article, in which (a) in the step 101, a cavity area of the first mold is larger than an area of the disposed composite material, (b) the first gate is positioned in a region where the sheet-shaped composite material is disposed in the step 301, and the second gate is positioned in a region where the sheet-shaped composite material is not disposed in the step 301, and (c) when molding is completed, the injection molding material is not inserted between the composite material and the second mold.

FIG. 1

107
111
105
112
108
102
101
103
X2
X1
P

EP 4 810 224 A1

## Description

### TECHNICAL FIELD

The present invention relates to a method for producing a molded article, the method including integrally molding a sheet-shaped composite material and an injection molding material having higher fluidity than the sheet-shaped composite material.

### BACKGROUND ART

A composite material containing reinforcing fibers such as carbon fibers and glass fibers as reinforcing materials has high tensile strength and tensile elastic modulus, is excellent in dimensional stability because of its small linear expansion coefficient, and is further excellent in heat resistance, chemical resistance, fatigue resistance, abrasion resistance, electromagnetic wave shielding property, and X-ray transmittance. Therefore, the composite material is widely applied to automobiles, sports and leisure, aerospace, general industrial applications, and the like.

By the way, a method for integrally producing a molded article from a plurality of different materials has been studied. For example, Patent Literature 1 discloses a mold device in which a pin is fitted into a pin receiving hole while a peripheral edge portion of a skin material is pushed into the pin receiving hole, and the pin is pressed and held by a pressing surface of a skin material pressing frame and a skin material placing surface of a lower mold. When the mold clamping is started after the molten thermoplastic resin is supplied between the skin material held by the lower mold and the molding surface of the upper mold, the molten thermoplastic resin flows, and the skin material is pressed by the mold clamping and narrowed to the inside of the mold while being stretched along the shape of the mold, and at the same time, the peripheral edge portion of the skin material is pulled in the inside direction of the mold while sliding between the pin and the pin receiving hole and between the pressing surface and the skin material placing surface.

Patent Literature 2 discloses that, as a mold for press molding a sheet material in which a discontinuous fiber-reinforced thermoplastic resin layer is laminated on at least a part of one surface of a continuous fiber-reinforced thermoplastic resin layer to produce a fiber-reinforced thermoplastic resin molded product, a mold is used in which a frame-shaped dam portion for preventing the discontinuous fiber-reinforced thermoplastic resin layer from flowing out of a cavity when an upper mold and a lower mold are closed is provided on an outer peripheral edge of the cavity while forming a gap for extending the continuous fiber-reinforced thermoplastic resin layer out of the cavity.

Patent Literature 3 discloses a technique in which an auxiliary mold slidable up and down in close contact with an outer peripheral wall of a lower mold of a stamping mold is disposed, and when a thermoplastic resin melt between an upper mold and a lower mold of the stamping mold is press-molded to form a base material and a skin material is pressure-bonded to the base material, the auxiliary mold prevents the melt from leaking from between the upper mold and the lower mold.

The production method provided by Patent Literature 4 is to produce an injection-molded product containing a plurality of sheets at lower cost. Specific procedures are as follows. First, a gate nozzle is extended, and a resin is injected between an outer sheet and an adjacent resin-impregnated reinforcing member sheet to bond them. Then, a movable mold is moved to the side opposite to a fixed mold, and the outer sheet and the resin-impregnated reinforcing member sheet are moved together with the movable mold. Thereafter, the resin-impregnated reinforcing member sheet bonded to the outer sheet is bonded to the reinforcing member resin-impregnated sheet located adjacent thereto. Finally, the moving step and the adhesive sheet bonding step are repeated by the cycle of the number of resin-impregnated reinforcing member sheets minus one.

Patent Literature 5 describes a molding method in which an injection molding material is caused to flow from a region other than an upright surface to the upright surface.

### CITATION LIST

### PATENT LITERATURE

Patent Literature 1:JP3413356B
Patent Literature 2:JP5855401B
Patent Literature 3:JPH09- 117922A
Patent Literature 4:JP2020-179549A
Patent Literature 5:WO2020/196076

## SUMMARY OF INVENTION

### TECHNICAL PROBLEM

However, when a plurality of materials having different fluidity are integrally molded in a mold, an end of a material having low fluidity (sheet-shaped composite material) in the mold may bite between injection molding materials having high fluidity.

As a further problem of the present invention, when the filling speed of the injection molding material in the mold is too high, problems occur, for example, (i) the orientation of the sheet-shaped composite material having low fluidity is disturbed, (ii) wrinkles are formed, and (iii) the composite material is elongated and torn. In contrast, when the filling speed is too slow, the injection material does not sufficiently spread in the mold, resulting in poor filling of the injection molding material and poor appearance.

In this regard, in the method of Patent Literature 1, the skin material is fixed by holding the skin material at the outer peripheral portion of the mold. However, when a material having low fluidity is completely injection-molded from the inside of a cavity of a mold, such as insert molding, the method of Patent Literature 1 cannot be applied.

In the method of Patent Literature 2, although the dam portion for preventing the discontinuous fiber-reinforced thermoplastic resin layer from flowing out is provided at the outer peripheral edge of the cavity, there is no consideration of a case where the sheet-shaped composite material having low fluidity is completely disposed in the cavity of the mold.

In the method of Patent Literature 3, the skin material is held outside the mold by a jig. However, the method of Patent Literature 3 cannot be applied to molding in a case where a material having low fluidity is completely disposed in a cavity of a mold, such as insert molding.

In the method of Patent Literature 4, as the resin-impregnated reinforcing member sheet, a sheet obtained by impregnating a plain woven cloth made of glass fibers having a line diameter of about 17 μm with a polypropylene resin is used. The use of a material in which reinforcing fibers are continuous and oriented in a specific direction, like a plain weave cloth makes it difficult to obtain desired physical properties when the material is slightly deviated (only by a few millimeters) under supply of an injection material and press-molding. Therefore, it is necessary to take measures such as an improvement of a mold so as to prevent deviation of the resin-impregnated reinforcing member sheet. In particular, in the case of attempting to impregnate a plurality of reinforcing members with a resin, the process becomes too complicated.

In the method of Patent Literature 5, in filling the injection molding material, it is not sufficient to consider the case where two or more gate positions are provided.

An object of the present invention is to provide a method for producing a molded article without fixing a sheet-shaped composite material at an outer peripheral portion of a cavity of a mold when integrally molding the sheet-shaped composite material and an injection molding material.

### SOLUTION TO PROBLEM

In order to solve the above problems, the present invention provides the following means.

1. A method for producing a molded article integrally molded from a sheet-shaped composite material containing reinforcing fibers dispersed in an in-plane direction and a resin and an injection molding material using a first mold and a second mold, the method including the following steps 101 to 401:

   step 101: disposing the sheet-shaped composite material in a cavity of a first mold;
   step 201: moving a second mold toward the disposed sheet-shaped composite material;
   step 301: injecting the injection molding material into a mold from a first gate and a second gate provided in the first mold; and
   step 401: pressing the sheet-shaped composite material and the injection molding material in the mold to integrally mold the molded article, in which

   (a) in the step 101, the cavity area of the first mold is larger than the area of the disposed sheet-shaped composite material,
   (b) the first gate is positioned in a region where the sheet-shaped composite material is disposed in the step 301, and the second gate is positioned in a region where the sheet-shaped composite material is not disposed in the step 301, and
   (c) when molding is completed, the injection molding material in not inserted between the sheet-shaped composite material and the second mold.

2. The method for producing a molded article according to the item 1, in which a flow time of the first injection molding

material injected from the first gate is 5 seconds or less, and a maximum flow rate of the first injection molding material injected from the first gate is 200 mm/sec or less.

3. The method for producing a molded article according to any one of the item 1 or 2, in which a weld line formed from the first injection molding material injected from the first gate and the second injection molding material injected from the second gate is generated outside a region where the sheet-shaped composite material is disposed after completion of molding.

4. The method for producing a molded article according to any one of the items 1 to 3, in which

V1/(X1 × volume of laminated injection portion) > V2/(X2 × volume of main body portion) is satisfied, where in a produced molded article, a portion formed from the sheet-shaped composite material refers to a reinforcing portion,
a portion formed from the injection molding material and laminated with the reinforcing portion is a laminated injection portion, and a portion formed from the injection molding material except for the laminated injection portion is a main body portion,
in a step 301, an injection amount of the first injection molding material injected from the first gate is V1, an injection amount of the second injection molding material injected from the second gate is V2, a distance from the first gate to an end of the sheet-shaped composite material is X1, and a distance from the second gate to an end of the sheet-shaped composite material is X2.

5. The method for producing a molded article according to the item 4, in which

when a straight line is defined to connect the first gate and the second gate and P is defined as a position where the straight line and an end of the sheet-shaped composite material intersect,
X1 is a distance between the position P and the first gate, and
X2 is a distance between the position P and the second gate.

6. The method for producing a molded article according to any one of the items 3 to 5, in which the first injection molding material reaches an end of the sheet-shaped composite material prior to the second injection molding material.

7. The method for producing a molded article according to any one of the items 4 to 6, in which X1 is 10 mm or more and 1000 mm or less, X2 is 20 mm or more and 1200 mm or less, V1 is 25 ml or more and 1200 ml or less, and V2 is 10 ml or more and 1000 ml or less.

8. The method for producing a molded article according to any one of the items 1 to 7, in which in the step 301, the second mold is in contact with the sheet-shaped composite material to block the injection molding material.

9. The method for producing a molded article according to any one of the items 1 to 8, in which in the step 101, the sheet-shaped composite material is disposed only in a cavity of the first mold.

ADVANTAGEOUS EFFECTS OF INVENTION

In the molded article produced by the production method of the present invention, when the molding is completed, the injection molding material is not inserted between the sheet-shaped composite material and the second mold, and thus the physical properties of the sheet-shaped composite material can be sufficiently exhibited, and the appearance design is excellent.

In addition, it is possible to prevent the position of the sheet-shaped composite material in the mold from shifting without fixing the sheet-shaped composite material outside the cavity of the mold.

Further, using the sheet-shaped composite material containing the reinforcing fibers dispersed in the in-plane direction causes the basic mechanical properties not to change significantly if the sheet-shaped composite material slightly flows during molding. In addition, shape followability is also improved as compared with the case of using continuous fibers such as plain weave cloth.

BRIEF DESCRIPTION OF DRAWINGS

FIG. 1 is a schematic diagram showing a relationship between an injection gate and a sheet-shaped composite material in a molding step 301 of the present invention.
FIG. 2 is a schematic diagram showing the relationship between the injection gate and the sheet-shaped composite material in the molding step 301 of the present invention.
FIG. 3A is a schematic diagram showing the relationship between the injection gate and the sheet-shaped composite

material when V1 < V2 and X1 > X2 in the molding step 301.

FIG. 3B is a schematic diagram showing the relationship between the injection gate and the sheet-shaped composite material when V1 < V2 and X1 > X2 in the molding step 301.

FIG. 4 is a schematic diagram showing a state in which the sheet-shaped composite material is disposed along a first mold.

FIG. 5 is a schematic diagram showing a positional relationship between the injection gate and a disposition region of the sheet-shaped composite material in the step 101.

FIG. 6 is a schematic diagram showing a state in which the disposition of the sheet-shaped composite material is bent along a mold in the step 101.

FIG. 7 is a schematic diagram showing a state in which the mold is bent from a second gate (102) to the sheet-shaped composite material in the step 101.

FIG. 8 is a schematic diagram showing a state in which a second mold is in contact with the sheet-shaped composite material to press the sheet-shaped composite material.

FIG. 9 is a schematic diagram showing an example of a cross section of a molded article fabricated by the production method of the present invention.

FIG. 10 is a schematic diagram showing an example of a cross section of a molded article fabricated by the production method of the present invention when molding is completed.

DESCRIPTION OF EMBODIMENTS

Hereinafter, embodiments of the present invention will be described in detail.

[Reinforcing portion, laminated injection portion, and main body portion]

In the molded article, a portion formed from the sheet-shaped composite material may be referred to as a reinforcing portion, a portion formed from the injection molding material in a lamination relationship with the reinforcing portion may be referred to as a laminated injection portion, and a portion formed from the injection molding material other than the laminated injection portion may be referred to as a main body portion. The main body portion is preferably larger than the reinforcing portion.

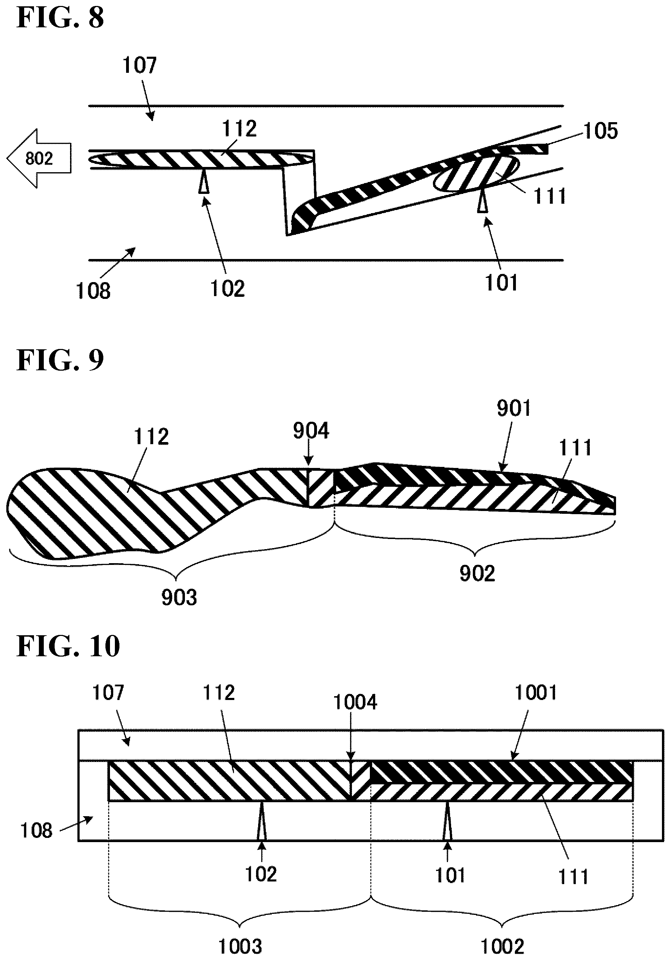

For example, FIG. 9 is a cross-sectional view of the molded article in the present embodiment. Reference numeral 901 in FIG. 9 denotes a reinforcing portion. A portion formed from the injection molding material in a lamination relationship with the reinforcing portion 901 is a laminated injection portion 902. A portion formed from the injection molding material other than the laminated injection portion 902 is a main body portion 903.

The laminated injection portion 902 is preferably fabricated from a first injection molding material 111 injected from a first gate described later. In contrast, the main body portion 903 is preferably formed from the injection molding material 111 and a second injection molding material 112 injected from a second gate described later.

The volume of the first injection molding material 111 to be used (injection amount V1 of the injection molding material) is preferably larger than the volume of the laminated injection portion 902, and the volume of the second injection molding material 112 to be used (injection amount V2 of the injection molding material) is preferably smaller than the volume of the main body portion 903. When the volume of the first injection molding material 111 is larger than the volume of the laminated injection portion 902 and the volume of the second injection molding material 112 is smaller than the volume of the main body portion 903, as shown in FIG. 9, a weld line 904 at the boundary between the first injection molding material 111 and the second injection molding material 112 is formed at a position away from the reinforcing portion 901 of the main body portion 903.

[Sheet-shaped composite material]

The sheet-shaped composite material includes reinforcing fibers and a resin, and in the sheet-shaped composite material, the reinforcing fibers are dispersed in an in-plane direction in the resin. The composite material in the present embodiment has a sheet shape, but the "sheet-shaped composite material" may be simply referred to as a "composite material".

[Reinforcing fibers]

The reinforcing fibers are preferably at least one selected from the group consisting of carbon fibers, aramid fibers, and glass fibers, and more preferably carbon fibers or glass fibers.

[Carbon fiber]

1. Carbon fiber in general

As the carbon fibers, polyacrylonitrile (PAN)-based carbon fibers, petroleum/coal pitch-based carbon fibers, rayon-based carbon fibers, cellulose-based carbon fibers, lignin-based carbon fibers, phenol-based carbon fibers, and the like are generally known. In the present embodiment, any of these carbon fibers can be suitably used. Among them, polyacrylonitrile (PAN)-based carbon fibers are preferably used in the present embodiment because of the excellent tensile strength thereof. Carbon fibers "Tenax" (registered trademark) STS40-24KS (mean fiber diameter: 7 μm) manufactured by TEIJIN LIMITED can be used as the PAN-based carbon fibers, for example.

2. Sizing agent for carbon fiber

A sizing agent may be attached to the surface of the carbon fiber. When the carbon fiber having a sizing agent attached is used, the type of the sizing agent can be appropriately selected according to the type of the carbon fiber and the type of the resin used in the composite material, and is not particularly limited.

[Glass fiber]

1. The glass fibers of the glass fibers in general may be any glass fibers commonly referred to as glass fibers. Glass compositions such as A glass, C glass, and E glass defined in JIS R3140:2006 are not particularly limited, and may optionally contain components such as $TiO_2$, $SO_3$, and $P_2O_5$. As the glass fibers, for example, glass fibers E-glass RS240QR-483 (count: 2400 g/1000 m) manufactured by Nitto Boseki Co., Ltd., can be used.
2. Sizing agent for glass fibers

The glass fibers may have a sizing agent attached to the surface thereof. When glass fibers having a sizing agent attached are used, the type of the sizing agent can be appropriately selected according to the type of the glass fibers and the type of the resin, and is not particularly limited. The glass fibers that are treated in advance with a conventionally known coupling agent, such as an organosilane-based compound, an organic titanium-based compound, an organoborane-based compound, and an epoxy-based compound, can be preferably used.

[Dispersion in in-plane direction]

The reinforcing fibers included in the sheet-shaped composite material are preferably dispersed in the in-plane direction. Dispersing the reinforcing fibers in the in-plane direction means dispersing with the fiber axes of the reinforcing fibers being in the in-plane direction. The angle between the fiber axes of the reinforcing fibers and the in-plane direction is preferably 45° or less. 1. The sheet-shaped composite material in the in-plane direction is preferably a plate-shaped material. The in-plane direction is any direction perpendicular to the plate thickness direction of the composite material. The "plane" in the in-plane direction is a "plane" perpendicular to the plate thickness direction of the composite material.

2. Random distribution in two-dimensional direction

The reinforcing fibers are preferably dispersed randomly in two-dimensional directions in the in-plane direction of the sheet-shaped composite material. When the composite material is press-molded without flowing, the form of the reinforcing fibers is substantially maintained before and after molding, and thus it is preferable that the reinforcing fibers included in the reinforcing portion after molding the composite material are also dispersed in a two-dimensional random manner in the in-plane direction.

Herein, the "dispersed in a two-dimensional random manner" refers to a state in which the reinforcing fibers are not oriented in a specific direction such as one direction in the in-plane directions of the composite material, but are oriented in a disordered manner, and are disposed in the sheet surface without exhibiting a specific directivity as a whole. The composite material obtained by using the discontinuous fibers randomly dispersed in a two-dimensional random manner is a substantially isotropic with having no in-plane anisotropy.

The degree of orientation representing the degree of dispersion of the reinforcing fibers in a two dimensional random manner in the in-plane direction of the composite material is evaluated by obtaining the ratio of the tensile elastic modulus of the composite material in two directions perpendicular to each other. When the ratio ($E\delta$) obtained by dividing a larger value by a smaller value of tensile elastic modulus measured in any direction of the composite material and a direction perpendicular to the direction is 5 or less, more preferably 2 or less, and still more preferably 1.5 or less, the reinforcing fibers can be evaluated to be dispersed in a two-dimensional random manner. When the reinforcing portion

formed of the composite material is a curved surface, as a method for evaluating the degree (degree of orientation) of dispersion of the reinforcing fibers in a two dimensional random manner in the in-plane direction of the reinforcing portion, the reinforcing portion may be heated to a temperature equal to or higher than the softening temperature to return to a flat plate shape, and only the reinforcing portion may be taken out followed by solidification. Then, a test piece is cut out from the reinforcing portion returned to the flat plate shape, and the tensile elastic modulus of the test piece in two directions perpendicular to each other is obtained, whereby the two-dimensional random dispersion in the reinforcing portion can be evaluated.

3. Advantages of dispersion in in-plane direction

Using the composite material including the reinforcing fibers dispersed in the in-plane direction, the basic mechanical properties do not change significantly even if the composite material slightly flows during molding or the disposed position is shifted. In addition, shape followability is improved as compared with the case of using continuous fibers such as plain weave cloth.

[Fiber length of reinforcing fibers included in sheet-shaped composite material]

The weight average fiber length LwA of the reinforcing fibers included in the composite material is preferably 1 mm or more, and more preferably 3 mm or more. When LwA is 100 mm or less, the fluidity of the material is less likely to decrease when the composite material is produced by press molding, and the reinforcing portion is easily fabricated into a desired shape. In addition, LwA is preferably 1 mm or more, because the mechanical strength of the obtained reinforcing portion is less likely to decrease.

The weight average fiber length LwA of the reinforcing fibers included in the composite material does not change before and after molding, and thus the weight average fiber length LwA of the reinforcing fibers that have been included in the composite material can be found by examining the weight average fiber length of the reinforcing fibers included in the reinforcing portion. The weight average fiber length LwA of the reinforcing fibers included in the molding material is more preferably 3 mm or more and 100 mm or less, still more preferably 3 mm or more and 80 mm or less, and even more preferably 5 mm or more and 60 mm or less. The weight average fiber length of the reinforcing fiber is obtained by the formula (1) described later.

[Injection molding material]

The injection molding materials (the first injection molding material 111 and the second injection molding material 112) forming the main body portion 903 and the laminated injection portion 902 preferable include resin and reinforcing fibers. The reinforcing fiber included in the injection molding material is preferably the carbon fiber or the glass fiber described above. The injection molding material has higher fluidity than the composite material.

[Fiber length of reinforcing fiber included in injection molding material]

In general, the weight average fiber length of the reinforcing fibers included in the injection molding material is shorter than the weight average fiber length of the reinforcing fibers included in the sheet-shaped composite material. Therefore, the injection molding material preferably includes reinforcing fibers having a weight average fiber length LwB and satisfies LwB < LwA. In the case of LwB < LwA, the mechanical strength of the reinforcing portion formed from the composite material is higher than the mechanical strength of the main body portion (and the laminated injection portion) formed from the injection molding material, and thus the molded article can be reinforced by the reinforcing portion.

The injection molding material is injected into a mold to mold the main body portion (and the laminated injection portion). In producing an injection molding material, there is a kneading step. In the present embodiment, the kneaded material is referred to as an injection molding material.

The weight average fiber length LwB of the reinforcing fibers included in the injection molding material is preferably less than 3 mm. The weight average fiber length LwB is more preferably 0.01 mm or more and less than 3 mm. The lower limit of the weight average fiber length LwB is preferably 0.01 mm or more, more preferably 0.05 mm or more, and still more preferably 0.1 mm or more. When the weight average fiber length LwB is 0.01 mm or more, the mechanical strength of the main body portion (and the laminated injection portion) is secured. In contrast, the upper limit of the weight average fiber length LwB is preferably less than 3 mm, more preferably less than 2 mm, and still more preferably less than 1 mm. The weight average fiber length of the reinforcing fiber is obtained by the formula (1) described later.

[Weight average fiber length Lw]

In general, when the fiber length of each reinforcing fiber is $L_i$, the weight average fiber length Lw is obtained by the following formula (1). The unit of the weight average fiber length Lw is mm.
[Mathematical formula 1]

$$Lw = (\sum_{i=1}^{I} L_i^2)/(\sum_{i=1}^{I} L_i) \quad \cdot \cdot \cdot (1)$$

In the formula, "I" represents the number of measured reinforcing fibers.
The extraction of the reinforcing fibers from the reinforcing portion 901 and the main body portion 903 (and the laminated injection portion 902) can be performed by, for example, performing a heat treatment at about 500°C for 1 hour and removing the resin in a furnace. The weight average fiber length Lw can be obtained, for example, by measuring the fiber lengths L1 to L 100 of 100 fibers (I = 100) randomly extracted from the reinforcing portion 901 and the main body portion 903 (and the laminated injection portion 902) after the heating treatment up to a unit of 1 mm using a caliper or the like, and performing a calculation based on the formula (1).
When short fibers that are unmeasurable using a caliper are included, it is preferable to add the reinforcing fibers obtained after removing the resin to water containing a surfactant, sufficiently stir the mixture by ultrasonic vibration, randomly collect the stirred dispersion of the reinforcing fibers with a measuring spoon to provide an evaluation sample, and measure the length of 3000 (I = 3000) reinforcing fibers with an image analyzer Luzex AP manufactured by NIRECO CORPORATION. Using the measured values L1 to L 3000 of the fiber length, the weight average fiber length Lw can be obtained in the same manner as in the formula (1) described above.

[Volume fraction of reinforcing fiber in sheet-shaped composite material and injection molding material]

For each of the composite material and the injection molding material, the volume fraction (Vf) of the reinforcing fibers can be obtained by the following formula (2).

Volume fraction of reinforcing fiber (Vf) = 100 × volume of reinforcing fiber/(volume of reinforcing fiber + volume of resin) (2)

The volume fraction of the reinforcing fibers included in the composite material is not particularly limited, but the volume fraction (Vfa) of the reinforcing fibers included in the composite material is preferably 10% by volume or more and 60% by volume or less, more preferably 20% by volume or more and 50% by volume or less, and still more preferably 25% by volume or more and 45% by volume or less.
In general, in the injection molding material having higher fluidity than the composite material, the fiber volume fraction (Vfb) of the injection molding material is lower than the fiber volume fraction (Vfa) of the composite material, and Vfa > Vfb is often satisfied. The volume fraction Vfb of the reinforcing fibers included in the injection molding material is preferably 1% by volume or more and 40% by volume or less, more preferably 5% by volume or more and 30% by volume or less, and still more preferably 10% by volume or more and 25% by volume or less.

[Analysis of volume fraction (Vf) of reinforcing fiber]

The analysis of the volume fraction of the reinforcing fibers is not limited, but it is preferable to measure as follows. A sample is cut out from the reinforcing portion or the main body portion (and the laminated injection portion), the resin is burned and removed in a furnace at 500°C for 1 hour, and the masses of the reinforcing fibers and resin are calculated by weighing the masses of the sample before and after the treatment. Then, the volume fractions of the reinforcing fibers and the resin are calculated using the specific gravity of each component. Vf = 100 × volume of reinforcing fiber/(volume of reinforcing fiber + volume of resin)

[Resin]

The resin included in the composite material and the resin included in the injection molding material may be thermosetting or thermoplastic.

1. Thermoplastic resin

1.1. Overview

When the resin used is a thermoplastic resin, the type thereof is not particularly limited, and one having a desired softening point or melting point can be appropriately selected and used. As the thermoplastic resin, a thermoplastic resin having a softening point in a range of 180°C to 350°C is generally used, but the thermoplastic resin is not limited thereto.

Examples of the thermoplastic resin include a polyolefin resin, a polystyrene resin, a polyamide resin, a polyester resin, a polyacetal resin (polyoxy methylene resin), a polycarbonate resin, a (meth)acrylic resin, a polyarylate resin, a polyphenylene ether resin, a polyimide resin, a polyether nitrile resin, a phenoxy resin, a polyphenylene sulfide resin, a polysulfone resin, a polyketone resin, a polyetherketone resin, a thermoplastic urethane resin fluorine-based resin, and a thermoplastic polybenzimidazole resin.

The thermoplastic resin used for the sheet-shaped composite material and the injection molding material may be only one type or two or more types. Example of a mode in which two or more types of thermoplastic resins are used in combination include, but not limited to, a mode in which thermoplastic resins having different softening points or melting points are used in combination, and a mode in which thermoplastic resins having different average molecular weights are used in combination.

When the thermoplastic resin is used, a polyolefin resin is preferably used, and a polypropylene resin is more preferably used.

1.2 Resin of sheet-shaped composite material and injection molding material

The resin included in the composite material is preferably a thermoplastic resin. When the resin included in the composite material is the thermoplastic resin, it is more preferable that the resin included in the composite material and the injection molding material is the same type of thermoplastic resin.

2. Thermosetting resin

The resin included in the composite material may be a thermosetting resin. In this case, for the composite material, a sheet molding compound using the reinforcing fibers may be used. Due to the high formability thereof, the sheet molding compound can be easily molded into complex shapes. The sheet molding compound has higher fluidity and formability than continuous fibers, and ribs and bosses can be easily formed.

[Other agents]

The resin used in the composite material or the injection molding material may include: various fibrous or non-fibrous fillers of organic fibers or inorganic fibers; and additives such as flame retardants, UV-resistant agents, stabilizers, release agents, pigments, softeners, plasticizers, and surfactants within a range not impairing the object of the present invention.

[Preferable combination of fibers]

The reinforcing fibers included in the composite material are preferably glass fibers and/or carbon fibers, and the reinforcing fibers included in the injection molding material are preferably glass fibers. As the reinforcing fibers included in the composite material, carbon fibers may be partially used, and glass fibers may be used in a portion other than the portion where the carbon fibers are used. The place where the carbon fiber is used as a part of the composite material is preferably a portion that becomes a peripheral portion when, for example, a hole h is provided in the molded article.

[Integrated molding]

In the method for producing a molded article of the present embodiment, the composite material and the injection molding material are integrally molded. The "integral molding" means that these members are continuously molded without seams and are not molded by joining separate members. In such integral molding, a structure is formed by one molding, and preferably, can be achieved by press molding. By being formed by integral molding, separate parts can be processed as one part, and the unit price of the part can be reduced. In addition, the number of assembling steps is reduced, and the cost of inventory can be reduced by reducing the number of parts.

[Production method]

The method for producing a molded article according to the present embodiment is a method for producing a molded article integrally molded from a composite material including reinforcing fibers dispersed in an in-plane direction and a resin and an injection molding material using a first mold and a second mold, and includes the following steps 101 to 401.

Step 101: a step of disposing the composite material in a cavity of the first mold.
Step 201: a step of moving the second mold toward the arranged composite material.
Step 301: a step of injecting the injection molding material into a mold from a first gate and a second gate provided in the first mold.
Step 401: a step of pressing the composite material and the injection molding material in the mold to integrally mold the molded article.

Integrally molding the composite material and the injection molding material provides a molded article having excellent bonding strength between the reinforcing portion, the main body portion, and the laminated injection portion. In addition, pressing the composite material and the injection molding material enables production of a molded article having a complicated shape with ribs and bosses.

[In case of cold press, production step: step 001]

When the resin included in the composite material and the injection molding material is a thermoplastic resin, cold press molding is preferably used. The production method for producing a molded article by cold press molding has "step 001: step of heating a composite material to a first predetermined temperature" prior to the step 101.

When the composite material is previously heated to the first predetermined temperature and the thermoplastic resin included in the composite material is crystalline, the first predetermined temperature is a temperature equal to or higher than the melting point of the thermoplastic resin and equal to or lower than the decomposition temperature thereof. When the thermoplastic resin contained in the composite material is amorphous, the first predetermined temperature is equal to or higher than the glass transition temperature of the thermoplastic resin and equal to or lower than the decomposition temperature thereof.

In a case of cold press molding, the temperatures of the first mold and the second mold are adjusted to a second predetermined temperature. When the thermoplastic resin contained in the composite material is crystalline, the second predetermined temperature is lower than the melting point of the thermoplastic resin. When the thermoplastic resin contained in the composite material is amorphous, the second predetermined temperature is lower than the glass transition temperature of the thermoplastic resin.

As described above, cold pressing can be suitably performed by adjusting the temperatures of the composite material and the first mold.

[Production method: step 101]

Step 101 is a step of disposing the composite material in the cavity of the first mold.

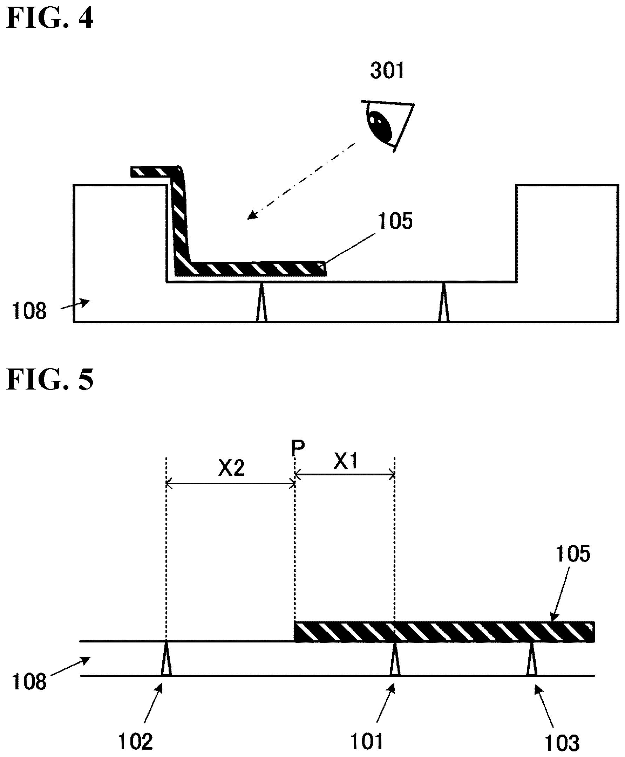

In the step 101, the first mold cavity area is larger than the area of the disposed composite material. The area of the composite material is an area along a mold observed on the mold when the composite material is disposed in the mold. For example, FIG. 4 illustrates a state in which a composite material 105 is disposed along a first mold 108. The area of the composite material refers to the area of the composite material 105 (the area of the surface of the composite material) that can be observed from 301 (eye) in FIG. 4, and does not include the area of the portion in contact with the mold 108 (the area of the back surface of the composite material). In other words, the area of the composite material refers to the area of one surface of the composite material, and does not refer to the total area of the front and back surfaces of the composite material and does not refer to the projected area.

It is preferable that the composite material is disposed in the cavity of the first mold after being preliminarily shaped so as to be along the cavity of the first mold. The preliminary shaping does not need to be completely performed along the first mold.

The area of the composite material disposed in the present embodiment is smaller than the first mold cavity area. Therefore, there is a region where the composite material is not disposed in the first mold cavity.

The composite material is preferably fixed in the cavity of the first mold by a plurality of fixing members. The fixing member may be, for example, a slide core that forms a hole in the molded article. For example, the composite material may be fixed by previously providing a hole in the composite material and inserting the fixing member into the hole of the composite material. Alternatively, the composite material may be fixed by sticking a pin-shaped fixing member into the

composite material. In this case, the composite material may not be provided with holes.

The composite material is preferably disposed only in the cavity of the first mold. As compared with the case where the composite material is disposed up to the outer peripheral edge of the cavity and fixed at the outer peripheral edge, additional equipment is unnecessary, and the molding step is not complicated.

[Production method: step 201]

Step 201 is a step of moving a second mold toward the disposed composite material. Although the second mold may be moved until the second mold is brought into contact with the composite material, when the injection molding material is introduced immediately before the second mold is brought into contact with the composite material in step 301, the step 201 includes up to introduction of the injection molding material.

[Production method: step 301]

1. Heating of injection molding material

When the thermoplastic resin contained in the injection molding material is crystalline, it is preferable that the injection molding material when being introduced into the mold be heated to a temperature that is equal to or higher than the melting point of the thermoplastic resin and equal to or lower than the decomposition temperature thereof, and when the thermoplastic resin is amorphous, it is preferable that the injection-molding material be heated to a temperature that is equal to higher than the glass transition temperature of the thermoplastic resin and equal to or lower than the decomposition temperature thereof. The heating is preferably performed in the kneading step.

2. Timing of injection of injection molding material

The injection molding material is introduced into a mold in the step 301. The timing of injecting the injection molding material may be immediately before or immediately after the pressure starts to be applied to a part of the composite material from the second mold. From the viewpoint of suppressing the positional deviation of the composite material in the mold, it is preferable to inject the injection molding material immediately after the second mold comes into contact with at least a part of the composite material and pressure starts to be applied to the composite material. In order to fill the injection molding material between the first mold and the composite material, the movement of the second mold may be stopped once before the mold is completely closed. The position where the movement of the second mold is stopped is preferably after the second mold comes into contact with the composite material.

3. Position of gate

3.1

A gate for injecting the injection molding material is provided in the first mold. More preferably, the gate for injecting the injection molding material is provided not in the movable mold but in the fixed mold, and the first mold is more preferably the fixed mold.

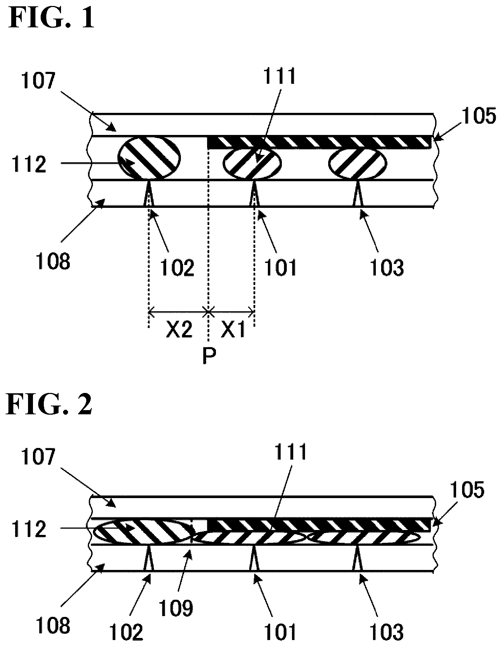

For example, in FIGs. 1 and 2, in order to inject the first injection molding material 111 and the second injection molding material 112, the gates (101, 102, and 103) are provided in the first mold (108).

3.2 First gate

The first gate is disposed in a region where the composite material 105 is disposed. FIG. 5 illustrates a state immediately after the composite material 105 is disposed in the first mold 108. In FIG. 5, a region where the composite material 105 is in contact with the first mold 108 is a region where the composite material 105 is disposed. The first gates (101 and 103) as injection gates are provided previously in this region.

3.3 Second gate

The second gate 102 is disposed in a cavity region of the first mold 108 where the composite material 105 is not disposed. For example, the second gate 102 in FIG. 5 is provided at a position where the composite material 105 is not in contact with the cavity of the first mold 108. The position of the second gate 102 is determined previously by back calculation from the position where the composite material 105 is disposed.

3.4 Injection amount and positions of first gate and second gate

In the present embodiment, as shown in FIGs. 1 and 2, the injection amount of the first injection molding material 111 from the first gate 101 is V1, the injection amount of the second injection molding material 112 from the second gate 102 is V2, the distance from the first gate to the end of the composite material is X1, and the distance from the second gate to the end of the composite material is X2.

As shown in FIG. 5, when there are a plurality of first gates 101 and 103, the distance from the first gate 101 closest to the end of the composite material 105 to the end of the composite material 105 is X1. Similarly, when there are a plurality of second gates, the distance from the second gate 102 closest to the end of the composite material to the end of the composite material 105 is X2.

3.4.1 X1 and X2

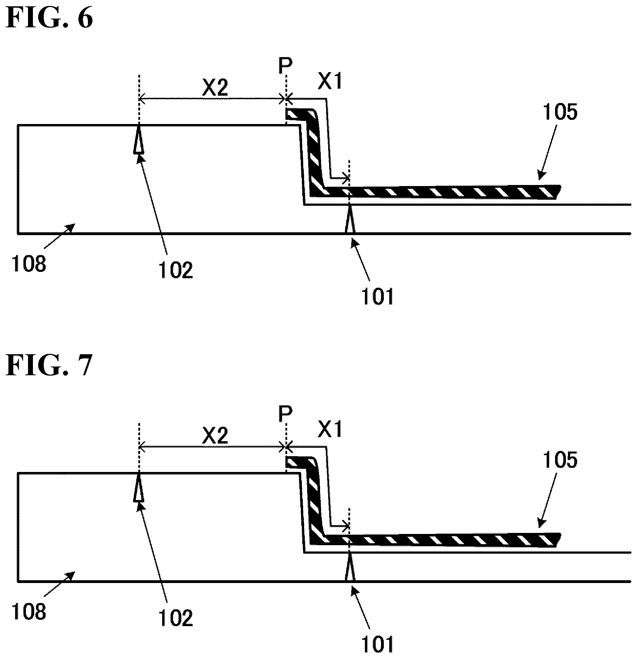

FIG. 5 illustrates examples of X1 and X2 in the present embodiment. X1 is the distance from the first gate (101) to the end P of the composite material (105). More specifically, when the composite material 105, the first gate (the first gate 101 closest to the end of the composite material 105), and the second gate (the second gate 102 closest to the end of the composite material 105) are viewed in a plan view, and the first gate 101 and the second gate 102 are connected by a straight line, a distance between a position P where the straight line intersects the end of the composite material 105 and the first gate 101 is X1. When the disposition of the composite material 105 is bent along the first mold 108 as shown in FIG. 6, it is the distance between the position P and the first gate 101 when measured by the creepage distance of the cavity surface of the first mold 108. When the distance X1 is short to some extent, the first injection molding material 111 injected from the first gate 101 can rapidly spread outside the end of the composite material 105.

On the other hand, X2 is the distance from the second gate (102) to the composite material (105). More specifically, in a plan view of the composite material 105, the first gate 101, and the second gate 102, when the first gate 101 and the second gate 102 are connected by a straight line, the distance between the second gate 102 and a position P where the straight line and the end of the composite material 105 intersect is X2. When the cavity surface of the first mold 108 is bent as shown in FIG. 7, the distance is the distance between the position P and the second gate 102 when measured by the creepage distance of the cavity surface of the first mold 108. When the distance X2 is secured to some extent, the second injection molding material 112 injected from the second gate 102 can remain outside the end of the composite material 105.

3.4.2 V1 and V2

V1 is the injection amount of the first injection molding material 111 injected from the first gates 101 and 103 provided in the region where the composite material 105 is disposed in the plan view of the cavity of the mold.

V2 is the injection amount of the second injection molding material 112 injected from the second gate 102 provided in the region other than the region where the composite material is disposed in the plan view of the cavity of the mold.

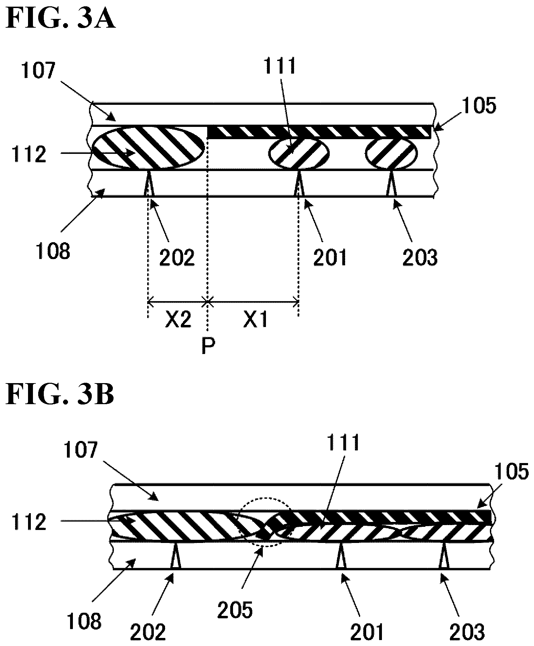

When the injection amount V1 of the first injection molding material 111 injected from the first gates 101 and 103 is large, the first injection molding material 111 from the first gates 101 and 103 is likely to rapidly spread into the mold cavity. In contrast, the injection amount V1 is small, causing slow speed at which the first injection molding material 111 spreads into the mold cavity. For example, as indicated by reference numeral 205 in FIG. 3B, the injection amount V1 decreases, thereby increasing the case where the end of the composite material 105 bites between the first injection molding material 111 and the second injection molding material 112.

The injection amount V2 of the second injection molding material 112 injected from the second gate 102 is small, thereby reducing the speed at which the second injection molding material 112 injected from the second gate 102 spreads into the mold cavity. In contrast, the injection amount V2 is large, thereby increasing the speed at which the second injection molding material 112 spreads into the mold cavity. For example, as indicated by reference numeral 205 in FIG. 3B, the injection amount V2 is large, thereby increasing the possibility that the end of the composite material 105 bites between the first injection molding material 111 and the second injection molding material 112.

3.4.3 V1/(X1 × volume of laminated injection portion) > V2/(X2 × volume of main body portion)

When V1/(X1 × volume of the laminated injection portion) > V2/(X2 × volume of main body portion) is satisfied, the end of the material (composite material) having low fluidity in the molding can be suitably prevented from biting between the flowable injection materials, V1/X1 > ((V2/X2) × 0.5) is more preferable, and V1/X1 > V2/X2 is still more preferable.

As described above, the composite material 105 is less likely to be sandwiched between the first injection molding

material 111 and the second injection molding material 112 as V1 increases and V2 decreases. Similarly, the composite material 105 is less likely to be sandwiched between the first injection molding material 111 and the second injection molding material 112 as X1 is shorter and X2 is longer.

For example, in the case of FIG. 3A, the injection amount V1 of the first injection molding material 111 injected from the first gates 201 and 203 is smaller than the injection amount V2 of the second injection molding material 112 injected from the second gate 202, and the distance X1 from the first gate 201 to the end P of the composite material 105 is longer than the distance X2 from the second gate 202 to the end P of the composite material 105. In such a case, V1/X1 < V2/X2 is likely to be satisfied, and as indicated by reference numeral 205 in FIG. 3B, the end of the composite material 105 may be bitten by the injection molding materials 111 and 112.

In addition, as the volume of the main body portion 903 is larger than that of the laminated injection portion 902, the composite material 105 is less likely to be sandwiched between the first injection molding material 111 and the second injection molding material 112. In general, an injection molding material flows in a direction in which a cavity space is large and a shearing force generated during flow is small. A space between the composite material 105 and the second mold 107 is narrow, and when the second injection molding material 112 enters the space, a relatively high shearing force is required. In contrast, when the volume of the main body portion 903 is large, the second injection molding material 112 starts to fill the large cavity space for forming the main body portion 903. The large cavity space has a relatively low shearing force generated at the time of flowing, and thus the main body portion 903 is formed first before the injection molding material 2 enters between the composite material 105 and the second mold, and thus entering between the composite material 105 and the second mold 107 is suppressed when V2 is large or X2 is short.

Further, when the size of the laminated injection portion 902 is small, V1 is small, or X1 is long, the filling with the first injection molding material 111 is completed relatively rapidly. Then, the laminated injection portion 902 is formed from the first injection molding material 111 before the main body portion 903 is formed from the second injection molding material 112. In this case, the first injection molding material 111 easily reaches the end portion of the composite material 105 prior to the second injection molding material 112.

In other words, satisfying V1/(X1 × volume of laminated injection portion)> V2/(X2 × volume of the main body portion), the position of a weld line 109 formed from the first injection molding material 111 injected from the first gates 101 and 103 and the second injection molding material 112 injected from the second gate 102 is formed outside the region in which the composite material 105 is disposed, and thus it is possible to prevent the end of the composite material 105 from being bitten by the injection molding materials 111 and 112 (for example, reference numeral 205 in FIG. 3B). In the preferable production method of the present embodiment, the weld line 109 formed from the injection molding material 1 injected from the first gates 101 and 103 and the injection molding material 2 injected from the second gate 102 is generated outside the region where the composite material is disposed after the molding is completed. In this case, the flow length of the first injection molding material 111 is longer than X1 (for example, FIG. 2). The composite material 105 may move during molding, and thus the position where the composite material 105 is disposed in the step 101 does not necessarily coincide with the region where the composite material 105 is disposed after completion of molding. In addition, the composite material 105 may be referred to as a reinforcing portion 901 after molding, and thus a region where the composite material 105 is disposed after completion of molding can be referred to as a region where the reinforcing portion 901 is disposed after completion of molding.

On the contrary, in a case of V1/(X1 × volume of laminated injection portion) < V2/(X2 × volume of the main body portion), as indicated by reference numeral 205 in FIG. 3B, the end of the composite material 105 bites between the first injection molding material 111 and the second injection molding material 112. In the present embodiment, the composite material 105 is not necessarily fixed at the outer peripheral portion of the cavity of the mold. This is because satisfying V1/(X1 × volume of laminated injection portion) > V2/(X2 × volume of main body portion) can prevent the position of the composite material in the mold from being largely shifted.

3.4.4 Preferred range

X1 is preferably 10 mm or more and 1000 mm or less, more preferably 30 mm or more and 800 mm or less, still more preferably 50 mm or more and 600 mm or less, and even more preferably 80 mm or more and 300 mm or less.

X2 is preferably 20 mm or more and 1200 mm or less, more preferably 50 mm or more and 1000 mm or less, still more preferably 80 mm or more and 800 mm or less, and even more preferably 100 mm or more and 500 mm or less.

V1 is preferably 25 ml or more and 1200 ml or less, more preferably 50 ml or more and 1000 ml or less, and still more preferably 100 ml or more and 800 ml or less.

V2 is preferably 10 ml or more and 1000 ml or less, more preferably 30 ml or more and 800 ml or less, and still more preferably 80 ml or more and 600 ml or less.

The volume of the laminated injection portion 902 is preferably 10 $cm^3$ or more and 1100 $cm^3$ or less, more preferably 30 $cm^3$ or more and 900 $cm^3$ or less, and still more preferably 50 $cm^3$ or more and 700 $cm^3$ or less.

The volume of the main body portion 903 is preferably 20 $cm^3$ or more and 1100 $cm^3$ or less, more preferably 40

$cm^3$ or more and 900 $cm^3$ or less, and still more preferably 90 $cm^3$ or more and 700 $cm^3$ or less.

The volume of the reinforcing portion 901 is preferably 10 $cm^3$ or more and 1100 $cm^3$ or less, more preferably 30 $cm^3$ or more and 900 $cm^3$ or less, and still more preferably 50 $cm^3$ or more and 700 $cm^3$ or less.

3.5 Generation position of weld line

The weld line is a portion in which a linear pattern generated in a portion where flows of a resin melt join in a mold is confirmed during molding in a molded article obtained by a molding method of melting and flowing a resin-based material, and is also referred to as a weld or a weld portion. This is referred to as a linear welding mark when metal materials are welded to each other.

The weld line 109 formed from the first injection molding material 111 injected from the first gates 101 and 103 and the second injection molding material 112 injected from the second gate 102 is preferably generated outside the region where the composite material 105 is disposed after completion of molding.

In other words, the weld line 109 formed from the first injection molding material 111 injected from the first gates 101 and 103 and the second injection molding material 112 injected from the second gate 102 is preferably generated outside the region where the reinforcing portion 901 is disposed after completion of molding. Generating the weld line 109 outside the region where the composite material 105 is disposed after completion of molding allows the end of the composite material 105 to be prevented from being bitten by the injection molding material.

3. 6

In the present embodiment, a plurality of first gates may be provided, and similarly, a plurality of second gates may be provided. For example, the gate denoted by reference numeral 103 in FIG. 1 is a gate in a region where the composite material 105 is disposed, and thus the gate corresponds to the first gate in the present embodiment.

When the plurality of first gates and the plurality of second gates are present, at least one pair of the first gate and the second gate may satisfy V1/(X1 × volume of laminated injection portion) > V2/(X2 × volume of main body portion). In a case where the plurality of first gates and the plurality of second gates are present, when a total amount of the first injection molding materials injected from all the first gates is V1 and a total amount of the first injection molding materials injected from all the second gates is V2, V1, V2, X1, and X2 may satisfy V1/(X1 × volume of laminated injection portion) > V2/(X2 × volume of main body portion). Herein, when a straight line is defined to connect the first gate closest to the end of the composite material and the second gate 102 closest to the end of the composite material, and P is defined as a position where the straight line and the end of the composite material intersect, a distance between the first gate closest to the end of the composite material and P is X1, and a distance between the second gate closest to the end of the composite material and P is X2.

4. Entry of injection molding material

In the present embodiment, when the molding is completed, the injection molding material is not inserted between the composite material and the second mold. This improves the appearance design surface formed from the second mold. When the injection molding material is inserted between the composite material and the second mold, the design surface of the composite material cannot be seen, and a beautiful design surface cannot be obtained. Further, the injection molding material is not inserted between the composite material and the second mold, whereby the reinforcing portion can exhibit the mechanical strength of the composite material as it is, allowing to exhibit the physical properties of the reinforcing fibers randomly dispersed in the two-dimensional direction included in the reinforcing portion.

Although the insertion of the injection molding material can occur in the step 301 or the step 401, in the present embodiment, the injection molding material is not inserted between the composite material and the second mold in both step 301 and step 401.

5. Blocking of injection molding material

In the step 301, it is preferable to block the injection molding material by bringing the second mold into contact with the composite material. For example, when the composite material 105 is pressed by the upper mold 107 (second mold) as shown in FIG. 8, the upper mold 107 comes into contact with the composite material 105, thereby allowing the second injection molding material 112 to be blocked. In this case, it is preferable that the relatively large cavity space in the mold is widened in the direction indicated by an arrow 802 in FIG. 8 because the second injection molding material 112 is less likely to enter between the upper mold 107 and the composite material 105.

[Flow rate of injection molding material]

1. Control of flow rate

The method for controlling the flow rate of the injection molding material is not particularly limited, but the flow rate of the injection molding material increases when the mold clamping time during molding is shortened or the mold clamping distance is shortened. In addition, the flow rate of the injection molding material depends on the introduction amount of the injection molding material.

2. Preferable flow rate

The flow rate of the injection molding material is not particularly limited, but the flow time of the first injection molding material 111 injected from the first gate is preferably 5 seconds or less, and the maximum flow rate is preferably 200 mm/sec or less.

When the flow time of the first injection molding material 111 is 5 seconds or less, it is easy to fill the cavity with the first injection molding material 111 before the second mold 107 comes into contact with the first injection molding material 111. Therefore, the first injection molding material 111 is not cooled and solidified at an early stage, and thus the surface design of the obtained molded article is improved. The flow time of the first injection molding material 111 is more preferably 4 seconds or less, and the flow time of the first injection molding material 111 is still more preferably 3 seconds or less.

In contrast, when the maximum flow rate of the first injection molding material 111 injected from the first gate is 200 mm/sec or less, the disposed composite material 105 is prevented from being pushed away, torn, or shifted by the first injection molding material 111. In other words, when the first injection molding material 111 flows, a shearing force against the inner wall surface of the second mold 107 and the composite material 105 is generated depending on the flow velocity. Setting the maximum flow rate of the first injection molding material 111 to 200 mm/sec or less, and thus suppressing the shearing force can prevent the composite material 105 from being torn off.

A more preferable maximum flow rate of the first injection molding material 111 is 10 mm/sec or more and 200 mm/sec or less, and a still more preferable maximum flow rate of the first injection molding material 111 is 30 mm/sec or more and 150 mm/sec or less.

The flow time of the second injection molding material injected from the second gate is preferably longer than the flow time of the first injection molding material.

In general injection molding, the injection time in injection molding is 2 seconds or less, preferably 1 second or less. Depending on the shape of the molded article, the injection rate (cc/sec) is often adjusted such that the filling is completed within one second. The flow rate referred to in the present embodiment is not the cylinder moving rate but the moving rate of the resin in the mold.

[Place for charging injection molding material]

The injection molding material 111 injected from the first gate 101 is preferably filled between the first mold 108 and the composite material 105. When the injection molding material 111 is filled in the mold, the composite material 105 is pressed against the cavity surface of the second mold 107, thereby allowing the positional shift of the composite material 105 to be suppressed. FIG. 1 illustrates how the composite material 105 is pressed against the second mold 107.

[Production method: step 401]

1. The composite material and the injection molding material are pressed and integrally molded by the first mold and the second mold. The molding pressure is not particularly limited, but is preferably less than 20 MPa, and more preferably 10 MPa or less. When the composite material and the injection molding material are pressed in this manner, the injection molding material having higher fluidity than the composite material flows in the mold.

Thereafter, the second mold is moved in a direction away from the first mold, and the molded article is taken out from the first mold. As described above, the molded article is completed.

[Production method: mold]

The first mold and the second mold in the present embodiment are preferably a pair of male and female molds. When the first mold and the second mold are used, each of them may be a movable mold, or one of them may be a movable mold and the other may be a fixed mold. For example, when the first mold is a fixed mold, the second mold may be a movable mold. The fixed mold may move depending on the mold. When the fixed mold moves, the mold with a relatively small moving distance is set as the fixed mold, and the mold with a relatively large moving distance is set as the movable mold.

In addition, a pair of male and female upper and lower molds in which the first mold is a lower mold and the second

mold is an upper mold may be used, and in this case, the second mold may be opened and closed by moving up and down toward the first mold. The mold may be a mold that performs molding by moving at least one of the first mold and the second mold in the horizontal direction to open and close the mold.

EXAMPLE

The present invention will be specifically described below using Examples, but the present invention is not limited thereto.

1. Material

1.1 Polypropylene resin

Resin for composite material: NOVATEC PP BC03C manufactured by Japan Polypropylene Corporation
Fiber-reinforced resin for injection molding material:
Mostron L-4070P manufactured by Prime Polymer Co., Ltd.

(Weight ratio of glass fiber 40%)

1.2 Glass fiber

A glass fiber E-glass RS240QR-4 83 manufactured by NITTO BOSEKI CO., LTD. to which a sizing agent was attached was prepared (may be abbreviated as GF).

2. Evaluation method

2.1 Analysis of volume fraction (Vf) of reinforcing fibers

A molded product was cut out from a region fabricated from the composite material or a region fabricated from the injection molding material, the resin was burned and removed in a furnace at 500°C for 1 hour, and the masses of the reinforcing fibers and the resin were calculated by weighing the masses of the samples before and after the treatment. Then, the volume fraction of the reinforcing fibers and the resin was calculated using the specific gravity of each component. Volume fraction of reinforcing fiber (Vf) = 100 × volume of reinforcing fiber/(volume of reinforcing fiber + volume of resin) formula (2)

2.2 The weight average fiber length of the reinforcing fibers included in the analysis molded product of the weight average fiber length is measured by previously removing the resin in a furnace at 500°C for about 1 hour.

2.2.1 After a portion formed from the composite material was taken out from the reinforcing fiber molded product included in the composite material and the resin was removed, the lengths of 100 randomly extracted glass fibers were measured and recorded up to a unit of 1 mm with a caliper, and the weight average fiber length (LwA) was obtained from the measured lengths (Li, where i is an integer of 1 to 100) of all the glass fibers by the above-described formula (1).

2.2.2 Reinforcing fiber included in injection molding material

A portion formed from the injection molding material was taken out from the molded product to remove the resin, and then the obtained reinforcing fiber was introduced into water containing a surfactant and sufficiently stirred by ultrasonic vibration. The stirred dispersion was randomly collected by a measuring spoon to provide a sample for evaluation, and the lengths of 3000 fibers were measured by an image analyzer Luzex AP manufactured by NIRECO CORPORATION. Using the measured value of the fiber length, the weight average fiber length Lw was obtained in the same manner as in the above formula (1).

[Example 1]

(1) Preparation of composite material

Glass fiber E-glass RS240QR-4 83 manufactured by Nitto Boseki Co., Ltd. was cut to use a fiber having a fiber length of 20 mm as the glass fiber, and a polypropylene resin Novatec PP BC03C manufactured by Japan Polypropylene

Corporation was used as the resin to fabricate a composite composition of the glass fiber and the polypropylene resin in which the glass fiber was oriented in a two-dimensional random manner based on the method described in U.S. Patent No. 10,006,677. The obtained composite composition was heated at 2.0 MPa for 5 minutes in a press apparatus heated to 250°C to fabricate a flat plate-shaped composite material having an average thickness of 3 mm, a length of 300 mm, and a width of 500 mm. The fiber volume fraction (Vf) was found to be 35%.

(2) Preparation of mold

Upper and lower molds were prepared, the lower mold was used as a first mold, and the upper mold was used as a second mold. The mold cavity had a rectangular shape (flat plate shape) of 300 mm × 806 mm, and one first gate and one second gate were provided. Design volumes of the reinforcing portion, the laminated injection portion, and the main body portion are shown in Table 1.

(3) Production of molded article

The composite material was dried in a hot air dryer at 120°C for 4 hours, then heated to 220°C by an infrared heater, and the composite material 105 was disposed in a lower mold 108 as shown in FIG. 5. More specifically, the composite material 105 of 300 mm in length × 500 mm in width was disposed so as to be aligned with an end of a flat plate-shaped mold cavity of 300 mm in length × 806 mm in width.

When a straight line was defined to connect the first gate 201 and the second gate 202 and a position P was defined as a position where the end intersected, the distance between the position P and the first gate 201 was X1, and the distance between the position P and the second gate 202 was X2. The distances X1 and X2 were designed as shown in Table 1.

After the temperature of the mold was set to 50°C, the mold was closed, and it was confirmed by a pressure gauge that pressure started to be applied to a part of the composite material 105, injection was performed using Mostron L-4070P manufactured by Prime Polymer Co., Ltd. with setting the injection amounts V1 and V2 of the injection molding material 1 and the injection molding material 2 as shown in Table 1. In addition, the heating temperature of the injection molding material was 240°C.

Thereafter, the composite material 105, the injection molding material 1, and the injection molding material 2 were simultaneously pressed at a pressing pressure of 20 MPa for 1 minute to produce a molded article.

(4) Observation of molded article

The sandwich of the end of the composite material between the injection molding material 1 and the injection molding material 2 and the misalignment of the disposition of the composite material were studied.

When the molding was completed, as shown in FIG. 10, a reinforcing portion 1001, a main body portion 1003, and a laminated injection portion 1002 were formed. In addition, the weld line formed from the injection molding material 1 and the injection molding material 2 was located at a place 1004.

The end portion of the composite material 1001 was not sandwiched between the injection molding material 1 and the injection molding material 2. No misalignment of the disposition of the composite material 1001 was observed.

Table 1 shows the results.

It was found that the volume of the main body portion 1003 was larger than the injection amount V2 of the injection molding material 2 and was formed from the injection molding material 1 and the injection molding material 2.

[Example 2]

A molded product was fabricated in the same manner as in Example 1, except that the size of the composite material, the injection amounts of the injection molding material 1 and the injection molding material 2, and the distance X2 were changed as shown in Table 1.

The end portion of the composite material 1001 was not sandwiched between the injection molding material 1 and the injection molding material 2. No misalignment of the disposition of the composite material 1001 was observed.

Table 1 shows the results.

[Example 3]

A molded product was produced in the same manner as in Example 1, except that the mold clamping time was shortened to increase the flow rate as shown in Table 1.

The end portion of the composite material 1001 was not sandwiched between the injection molding material 1 and

the injection molding material 2. A slight misalignment was observed in the disposition of the composite material 1001.

Table 1 shows the results.

[Comparative Example 1]

A molded product was produced in the same manner as in Example 1, except that the injection amount of the injection molding material 1, the injection amount of the injection molding material 2, the distance X1, and the distance X2 were changed as shown in Table 1. Table 1 shows the results. The distance X1 was long and the distance X2 was short, and thus the end portion of the composite material was sandwiched between the injection molding material 1 and the injection molding material 2. The misalignment of the disposition of the composite material 1001 was not observed.

Table 1 shows the results.

[Table 1]

| | Example 1 | Example 2 | Example 3 | Comparative Example 1 |
|---|---|---|---|---|
| Size of composite material (corresponding to size of reinforcing portion) | | | | |
| Thickness (mm) | 3 | 3 | 3 | 3 |
| Length (mm) × width (mm) | 300×500 | 300×260 | 300×500 | 300×500 |
| Injection molding material | | | | |
| Injection amount V1 (ml) of first injection molding material | 600 | 300 | 600 | 500 |
| Injection amount V2 (ml) of second injection molding material | 400 | 500b | 400 | 500 |
| Molding | | | | |
| Distance x1 (mm) | 150 | 150 | 150 | 200 |
| Distance x2 (mm) | 200 | 100 | 200 | 50 |
| Flow time of first injection molding material | 0.54 | 0.54 | 0.45 | 0.54 |
| Flow rate (mm/sec) of first injection molding material | 150 | 150 | 384 | 150 |
| Size of mold cavity | | | | |
| Thickness (mm) | 6 | 6 | 6 | 6 |
| Length (mm) × width (mm) | 300×806 | 300×569 | 300×806 | 300×806 |
| Molded article | | | | |
| Size of reinforcing portion | | | | |
| Thickness (mm) | 3 | 3 | 3 | 3 |
| Length (mm) × width (mm) | 300×500 | 300×250 | 300×500 | 300×500 |
| Volume ($cm^3$) | 450 | 225 | 450 | 450 |
| Size of laminated injection portion | | | | |
| Thickness (mm) | 3 | 3 | 3 | 3 |
| Length (mm) × width (mm) | 300×500 | 300×250 | 300×500 | 300×500 |
| Volume ($cm^3$) | 450 | 225 | 450 | 450 |
| Size of main body portion | | | | |
| Thickness (mm) | 6 | 6 | 6 | 6 |
| Length (mm) × width (mm) | 300×306 | 300×319 | 300×306 | 300×306 |
| Volume ($cm^3$) | 550 | 575 | 550 | 550 |
| | | | | |

(continued)

| | | | | |
|---|---|---|---|---|
| Size of main body portion | | | | |
| V1/(x1 × volume of laminated injection portion) | 0.0089 | 0.0089 | 0.0089 | 0.0056 |
| V2/(x2 × volume of main body portion) | 0.0036 | 0.0087 | 0.0036 | 0.0182 |
| | | | | |
| Observation of molded article | | | | |
| Sandwich of portion of reinforcing portion between first injection molding material and second injection molding material | No | No | No | Present (sandwiched) |
| Misalignment of disposition of reinforcing portion | No | No | Yes | No |

## Claims

**1.** A method for producing a molded article integrally molded from an injection molding material, and a sheet-shaped composite material including: reinforcing fibers dispersed in an in-plane direction; and a resin, using a first mold and a second mold, the method comprising the following steps 101 to 401:

step 101: disposing the sheet-shaped composite material in a cavity of the first mold;
step 201: moving the second mold toward the disposed sheet-shaped composite material;
step 301: injecting the injection molding material into a mold from a first gate and a second gate provided in the first mold; and
step 401: pressing the sheet-shaped composite material and the injection molding material in the mold to integrally mold the molded article, wherein

(a) in the step 101, a cavity area of the first mold is larger than an area of the disposed sheet-shaped composite material,
(b) the first gate is positioned in a region where the sheet-shaped composite material is disposed in the step 301, and the second gate is positioned in a region where the sheet-shaped composite material is not disposed in the step 301, and
(c) when molding is completed, the injection molding material is not inserted between the sheet-shaped composite material and the second mold.

**2.** The method for producing a molded article according to claim 1,
wherein a flow time of a first injection molding material injected from the first gate is 5 seconds or less, and a maximum flow rate of the first injection molding material injected from the first gate is 200 mm/sec or less.

**3.** The method for producing a molded article according to any one of claim 1 or 2,
wherein a weld line formed from the first injection molding material injected from the first gate and the second injection molding material injected from the second gate is generated outside a region where the sheet-shaped composite material is disposed after completion of molding.

**4.** The method for producing a molded article according to any one of claims 1 to 3,

wherein V1/(X1 × volume of laminated injection portion) > V2/(X2 × volume of main body portion) is satisfied, where
in a produced molded article, a portion formed from the sheet-shaped composite material refers to a reinforcing portion,
a portion formed from the injection molding material and laminated with the reinforcing portion refers to a laminated injection portion, and a portion formed from the injection molding material except for the laminated injection portion refers to a main body portion, and
in the step 301, an injection amount of the first injection molding material injected from the first gate is defined as V1, an injection amount of the second injection molding material injected from the second gate is defined as V2, a distance from the first gate to an end of the sheet-shaped composite material is defined as X1, and a distance from

the second gate to an end of the sheet-shaped composite material is defined as X2.

**5.** The method for producing a molded article according to claim 4, wherein

when a straight line is defined to connect the first gate and the second gate and a position P is defined as a position where the straight line and an end of the sheet-shaped composite material intersect,
X1 is a distance between the position P and the first gate, and
X2 is a distance between the position P and the second gate.

**6.** The method for producing a molded article according to any one of claims 3 to 5, wherein the first injection molding material reaches an end of the sheet-shaped composite material prior to the second injection molding material.

**7.** The method for producing a molded article according to any one of claims 4 to 6, wherein X1 is 10 mm or more and 1000 mm or less, X2 is 20 mm or more and 1200 mm or less, V1 is 25 ml or more and 1200 ml or less, and V2 is 10 ml or more and 1000 ml or less.

**8.** The method for producing a molded article according to any one of claims 1 to 7, wherein in the step 301, the second mold is in contact with the sheet-shaped composite material to block the injection molding material.

**9.** The method for producing a molded article according to any one of claims 1 to 8, wherein in the step 101, the sheet-shaped composite material is disposed only in a cavity of the first mold.

# FIG. 1

107
111
105
112
108
102
101
103
X2
X1
P

# FIG. 2

107
111
105
112
108
102
109
101
103

# FIG. 3A

107
111
105
112
108
202
201
203
X2
X1
P

# FIG. 3B

107
111
105
112
108
202
205
201
203

FIG. 4

301
105
108

FIG. 5

P
X2
X1
105
108
102
101
103

# FIG. 6

P
X2
X1
105
108
102
101

# FIG. 7

P
X2
X1
105
108
102
101

FIG. 8

107
112
105
802
111
108
102
101

FIG. 9

901
112
904
111
903
902

FIG. 10

107
112
1004
1001
108
102
101
111
1003
1002

**INTERNATIONAL SEARCH REPORT**

International application No. **PCT/JP2024/037425**

**A. CLASSIFICATION OF SUBJECT MATTER**

***B29C 45/14***(2006.01)i; ***B29C 43/34***(2006.01)i; ***B29C 45/27***(2006.01)i; ***B29C 70/68***(2006.01)i
FI: B29C45/14; B29C45/27; B29C70/68; B29C43/34

According to International Patent Classification (IPC) or to both national classification and IPC

**B. FIELDS SEARCHED**

Minimum documentation searched (classification system followed by classification symbols)

B29C45/14; B29C43/34; B29C45/27; B29C70/68

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2023-139560 A (MITSUI CHEMICALS, INC.) 04 October 2023 (2023-10-04) paragraphs [0013]-[0074], fig. 1-10 | 1-9 |
| A | JP 2015-193118 A (TORAY INDUSTRIES, INC.) 05 November 2015 (2015-11-05) paragraphs [0014]-[0027], fig. 1-8 | 1-9 |
| A | JP 2013-6389 A (TORAY INDUSTRIES, INC.) 10 January 2013 (2013-01-10) paragraphs [0031]-[0038], fig. 1-5 | 1-9 |

☐ Further documents are listed in the continuation of Box C.　☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **03 December 2024** | **17 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/037425**

| Patent document cited in search report | Publication date (day/month/year) | Patent family member(s) | Publication date (day/month/year) |
|---|---|---|---|
| JP 2023-139560 A | 04 October 2023 | (Family: none) | |
| JP 2015-193118 A | 05 November 2015 | (Family: none) | |
| JP 2013-6389 A | 10 January 2013 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3413356 B
- JP 5855401 B
- JP 2020179549 A
- WO 2020196076 A
- US 10006677 B